# EUROPEAN PATENT SPECIFICATION

(11) **EP 4 247 700 B1**
(45) Date of publication and mention of the grant of the patent: **02.10.2024**
(21) Application number: 21819616.0
(22) Date of filing: 12.11.2021
(51) Int. Cl.: B63B 21/26, B63B 21/50

(54) **ANCHOR SYSTEMS AND METHODS**
ANKERSYSTEME UND -VERFAHREN
SYSTÈMES ET PROCÉDÉS D'ANCRAGE

(30) Priority: 19.11.2020 NO 20201260
(43) Date of publication of application: 27.09.2023
(73) Proprietor: Mhwirth AS, 4604 Kristiansand (NO); MHWirth GmbH, 41812 Erkelenz (DE)
(72) Inventor: ROSSELAND, Tom Egil, HØVÅG 4770 (NO)
(74) Representative: Zacco Norway AS
(86) International application number: PCT/NO2021/050237
(87) International publication number: WO 2022/108453

(56) References cited:
- DE-C1- 19 626 589
- FR-A- 1 548 477
- US-A- 2 891 770
- US-A- 3 330 338
- US-A- 3 827 258
- US-A- 3 984 991

## Description

The present invention relates to anchor installation methods, and particularly to methods for establishing sea floor moored foundations from a vessel.

### BACKGROUND

Mooring and anchoring systems are critical to ensure reliable station keeping of floating objects such as floating wind turbines or floaters used in petroleum production. Many solutions exist for this purpose, such as suction bucket moorings, embedded anchors, torpedo anchors, etc. With the increasing development of, for example, offshore renewable energy and the exploration of more remote and environmentally challenging areas for natural resources exploration, there is a continuous need for improved mooring and anchoring technology. Improved mooring and anchoring technology is also relevant for various other offshore applications.

Documents which may be useful for understanding the field of technology include US 3330338 A, which describes an anchor adapted to be sunk in the ocean floor and left there in the event that it is necessary to disconnect the anchor line and move an anchored vessel or other structure to another location; DE 196 26 589 C1, which describes a method of sinking boreholes using a driven rotary tool carrying cutters; FR 1 548 477 A, which describes a method of anchoring floating structures at sea; GB 1526934 A; US 3827258 A and US 3984991 A.

The present disclosure has the objective to provide improved technology for mooring and anchoring, or at least alternative solutions to the state of the art.

### SUMMARY

According to the invention, there is provided a method for installing a sea floor anchor, the method comprising the steps: (a) building a drill string from a vessel, (b) drilling a hole in the sea floor, (c) lowering an anchor member from the vessel and into the hole, and (d) cementing the anchor member in place in the hole via a cementing hose from the vessel. After carrying out steps (a)-(d), the vessel is moved to a new drilling location with the drill string hung off from the vessel.

The detailed description below and appended claims outline further embodiments.

### BRIEF DESCRIPTION OF THE DRAWINGS

These and other characteristics will become clear from the following description of illustrative embodiments, given as non-restrictive examples, with reference to the attached drawings, in which
Figs 1 and 2 illustrate an installation according to some embodiments.
Figs 3-7 illustrate steps of a method according to some embodiments.
Fig. 8 illustrates an anchor.
Figs 9a-b illustrate a drilling machine and associated components.
Figs 10-13 illustrate a vessel for use with some embodiments.
Figs 14-16 illustrate steps of a method where a structure is tilted or skidded.
Fig. 17 illustrates steps of a method where a liquid flow is generated in a drill string.
Fig. 18 illustrates a vessel having a side cantilever structure.
Figs 19-24 show various embodiments of an anchor member.
Fig 25 illustrates a vessel for use with some embodiments.

### DETAILED DESCRIPTION

The following description may use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

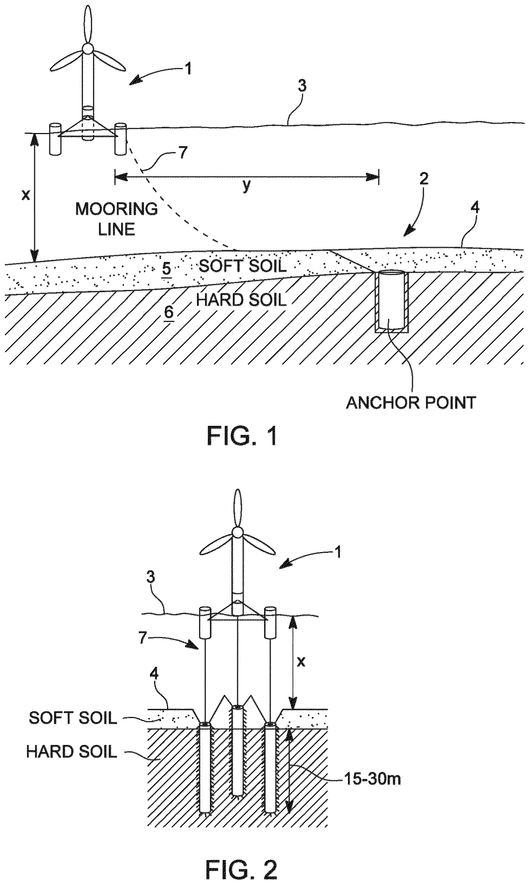

Figures 1 and 2 illustrate an example installation which may utilise embodiments described below. A floating structure 1 is moored to a sea floor 4 by means of a plurality of anchors 2 (in Fig. 1, only one anchor 2 is shown but it is to be understood that further anchors will usually be present). Mooring lines 7 connect the floating structure 1 to the anchors 2. The floating structure 1 may, for example, be a floating wind power generator, as illustrated. The floating structure 1 is moored at a location with a water depth x (the vertical distance between a waterline 3 and the sea floor 4). As illustrated in Fig. 1, the anchor 2 may be installed at a horizontal distance y away from the floating structure 1 to provide a so-called catenary mooring. Alternatively, as illustrated in Fig. 2, the mooring lines 7 may extend substantially vertically to provide a vertical mooring system. The mooring system may, for example, comprise three anchors 2 and three mooring lines 7.

The sea floor 4 may comprise a soft soil layer 5 and a hard soil layer 6. The soft soil layer 5 may have a lower density or hardness compared to the hard soil layer 6. The soft soil layer 5 and the hard soil layer 6 may combined make up a rock formation, or the sea floor 4 may comprise only a rock formation, only a soft soil layer 5 or only a hard soil layer 6.

According to an embodiment, there is provided a method for installing a sea floor anchor 2, the method comprising the steps
(a) building a drill string 13 from a vessel 10,
(b) drilling a hole 12 in the sea floor 4,
(c) lowering an anchor member 14 from the vessel 10 and into the hole 12,
(d) cementing the anchor member 14 in place in the hole 12 via a cementing hose 15 from the vessel 10.

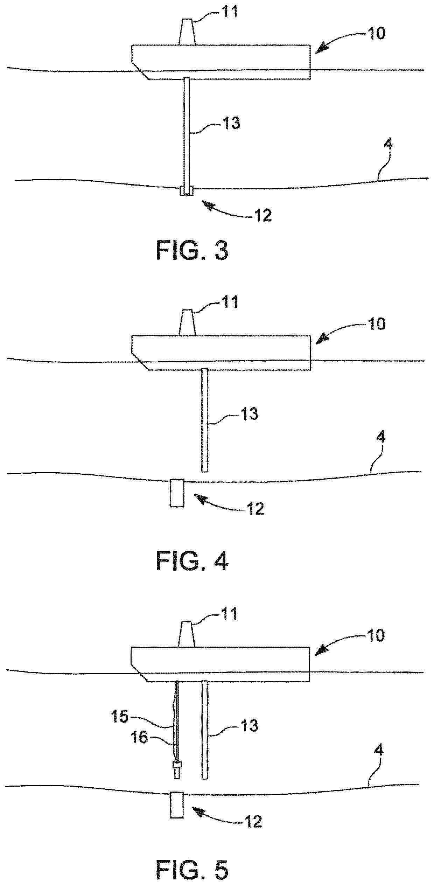

Figures 3-7 illustrate a method for installing a sea floor anchor 2. A vessel 10 is provided and positioned above a location at which the sea floor anchor 2 is to be installed. A drill string 13 is built on the vessel 10, for example by a plurality of individual drill string segments (for example so-called joints or stands) connected together and lowered towards the sea floor 4. The drill string 13 comprises a drilling head for engaging the sea floor 4 and drilling a hole 12, as illustrated in Fig. 3.

When the hole 12 is completed, for example after drilling the hole 12 to a depth of a few meter, the drill string 13 is lifted out of the hole 12 and may be hung off from the vessel 10 instead of being retrieved fully back onto the vessel 10. In such a case, the drill string 13 can remain hung off from the vessel 10 while carrying out steps (c) and (d). If using a vessel 10 having a moon pool (see below), the drill string 13 may be hung off through the moon pool 20. The vessel 10 may be provided with a skidding arrangement or equivalent mechanism to allow the drill string 13 to be moved to the side or sideways within the moon pool prior to carrying out steps (c) and (d). Moving or skidding the drill string 13 to the side may comprise moving or skidding the drill string 13 away from a vertical axis extending through the drilling machine 30 (described below). This may be done, for example, by means of a trolley or skid arranged in or adjacent the moon pool. In this way, the drill string 13 may, in a first position, be positioned vertically below the drilling machine 30 and in a second position be spaced from a vertical axis extending through the drilling machine 30.

The drilling (step (b)) may be carried out through the moon pool 20 of the vessel 10.

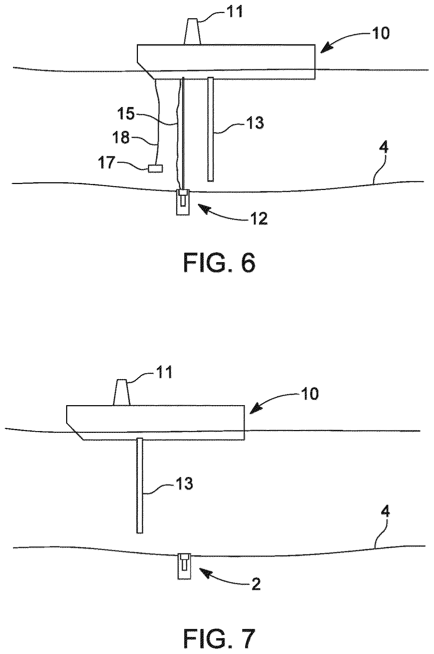

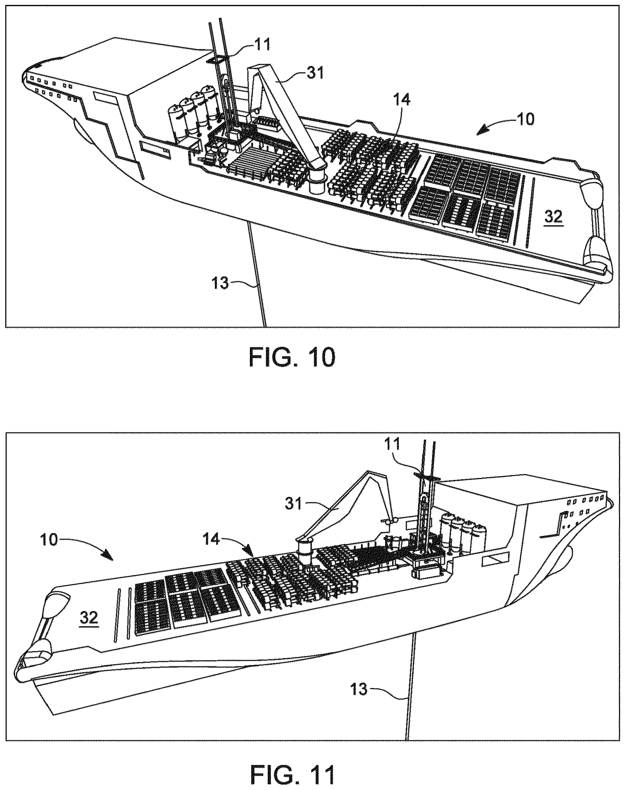

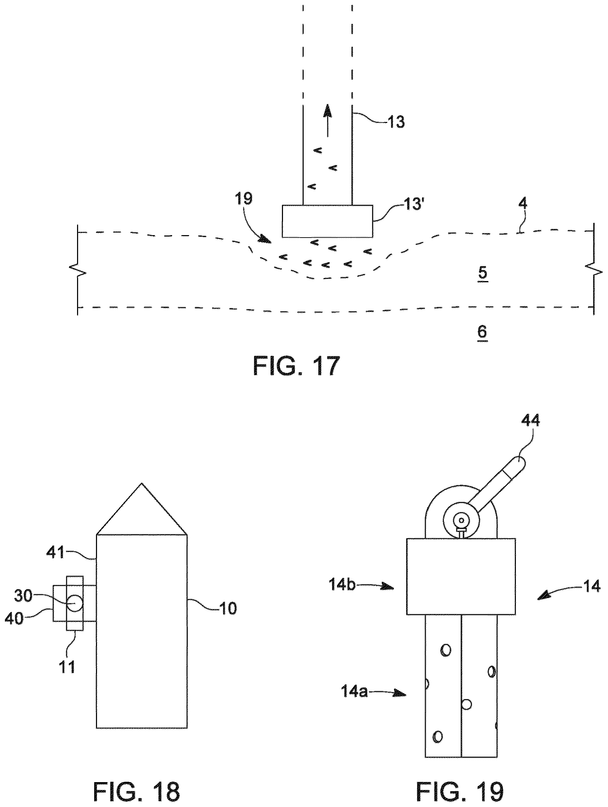

Illustrated in Fig. 4, after drilling of the hole 12 has been completed, the vessel 10 may move slightly off the drilling position and/or the drill string 13 may be skidded or moved away from the drilling position. Illustrated in Figs 5 and 6, an anchor member 14 is then lowered from the vessel 10 and into the hole 12. The anchor member 14 may be lowered by means of a winch and an elongate lifting member 16 (see Fig. 5), such as a rope or a wire. Supporting the anchor member 14 from the vessel 10 during lowering may be done via a crane 31 (see Figs 10-13). The anchor member 14 may be lowered through a moon pool 20 of the vessel 10 or, optionally, over a side (41) of the vessel 10. If the lowering of the anchor member 14 is supported by the crane 31, the elongate lifting member 16 may be a rope or a wire arranged on the crane 31 (such as on a winch drum on the crane 31), or it may be a rope or a wire arranged in connection with a separate winch on the vessel 10 and wherein the rope or wire is led via a sheave or the like held by the crane 31. If lowering the anchor member 14 over a side of the vessel 10, a cantilever structure 40 (see Fig. 18) may optionally be used for guidance or support.

Also illustrated in Figs 5 and 6, a cementing hose 15 may be lowered together with the anchor member 14 and fixed to the anchor member 14. The cementing hose 15 may be a tube or pipe operable to carry cement from the vessel 10 in order to fill voids between the anchor member 14 and the walls of the hole 12 so as to cement the anchor member 14 in place in the hole 12.

Alternatively, the cementing hose 15 can be provided separately from the anchor member 14, for example in that the cementing hose 15 is lowered separately from the vessel 10.

The cementing hose 15 may be handled by an ROV 17 which is controlled via a control umbilical 18 from the vessel 10 (see Fig. 6).

After pumping cement into the hole 12, the cementing hose 15 can be detached from the anchor 2. This can, for example, be done by an ROV 17. An ROV 17 may also, additionally or alternatively, detach the lifting member 16. Alternatively, the cementing hose 15 and/or the lifting member 16 may be detached for example via a release mechanism which activates by applying tension from the vessel 10, for example via a sideways or vertical tension applied to the cementing hose 15 and/or the lifting member 16.

After carrying out steps (a)-(d), the vessel 10 moves to a new drilling location with the drill string 13 hung off from the vessel 10, as illustrated in Fig. 7. The anchor 2 has been installed and may be connected up to a floating object by another vessel, if necessary after a period of time to allow the cement to settle. Optionally, the vessel 10 may connect up the anchor 2 to a mooring line or to a floating object before moving away.

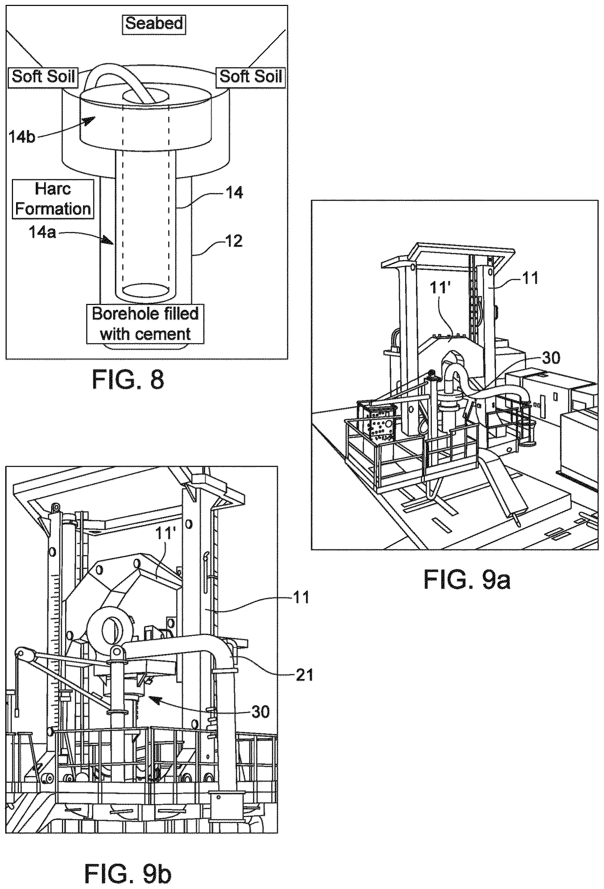

Fig. 8 illustrates an anchor member 14. The anchor member 14 is preferably cylindrical, and may have a varying cross-sectional diameter. For example, the anchor member 14 may have a smaller diameter at a lower part 14a and larger diameter at an upper part 14b thereof.

The hole 12 may advantageously be drilled with a diameter of more than 500 mm, more than 750 mm, more than 1000 mm or more than 1250 mm.

The anchor member 14 may advantageously have a length of more than the diameter of the hole 12, more than 150% of the diameter of the hole 12, or more than 200% of the diameter of the hole 12.

Figs 9a-b illustrate a drilling machine 30 suitable for use on a vessel 10. The vessel 10 may have a support structure 11, such as a rig or tower structure, for holding the drilling machine 30. The drilling machine 30 and/or the support structure 11 may be positioned on a deck of the vessel 10. The drilling machine 30 can be a drilling machine operable to rotate the drill string 13.

Advantageously, the drill string 13 is suspended from the vessel 10 from a heave compensated drilling machine 30. This can be achieved may making the drilling machine heave compensated in the support structure 11.

Advantageously, the anchor member 14 is suspended from the vessel 10 from a heave compensated winch or crane 31. The winch or crane 31 may be independent of the drilling machine 30.

Optionally, the drill string 13 may be hung off from the vessel 10 as described above by leaving the drill string 13 hanging from the drilling machine 30 while operating the winch or crane 31 to carry out the steps relating to lowering and cementing the anchor member 14.

As described above, the sea floor may comprise a soft soil layer 5 (see Figs 1 and 2) and a hard soil layer 6, wherein the hard soil layer 6 is more compact than the soft soil layer 5. The method may comprise drilling into the hard soil layer 6 and cementing the anchor member 14 at least partly in the hard soil layer 6.

The method may comprise removing a part of the soft soil layer 5 prior to step (b). The soft layer 5 may be removed by drilling through the soft soil layer 5 prior to drilling into the hard soil layer 6. The vertical thickness of the soft soil layer 5 may be less than 5 m, less than 4 m, less than 3 m or less than 2 m.

Any embodiments of the method described herein may comprise lowering a guide base with guide wires to the sea floor 4 and drilling through the guide base. The guide wires may also be used for quick access to the drilled hole when running and landing the anchor member.

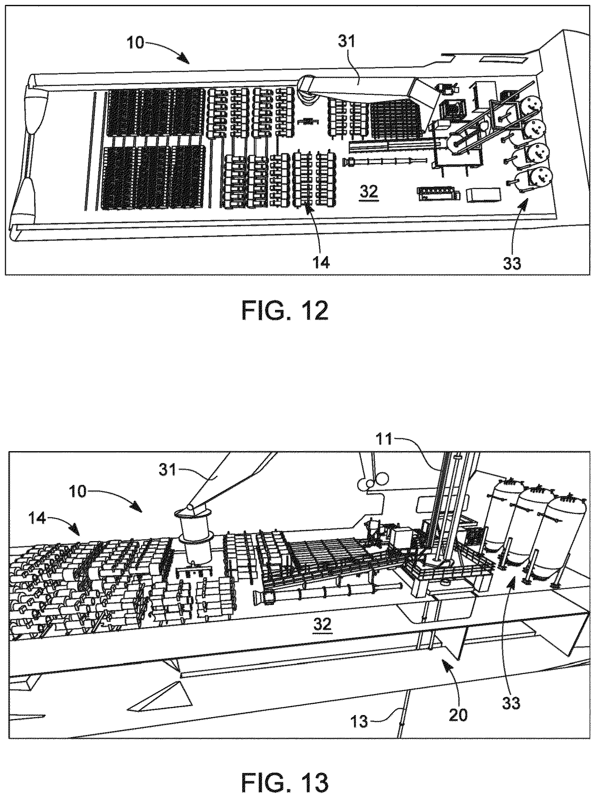

Figures 10-13 illustrate a vessel 10 which may be suitable for carrying out a method according to embodiments described herein. The vessel 10 comprises components described above, including a support (rig or tower) structure 11 with a drilling machine 30 and a crane 31, which in this example is a knuckle-boom crane. The vessel 10 has a moon pool 20 (see Fig. 13) in its hull, through which the drill string 13 and other components (such as wire/rope elongate lifting member 16) may be lowered.

The vessel 10 has a deck 32 on which associated components and equipment can be stored during operation. Particularly, the vessel 10 may have storage, on the deck 32 or elsewhere, for a plurality of anchor members 14 for installation. In this way, a large number of anchor members 14 may be available and ready for installation on the vessel 10, such as to allow efficient operation.

The vessel 10 may also comprise fluid handling systems 33 (see Figs 12 and 13) for handling of drilling fluid and/or cement, as may be required during the abovementioned operations.

The anchors 2 can be designed for the expected soil conditions and operational conditions, for example in view of their diameter, length, materials properties, etc. The anchors 2 may support one mooring line 7 (see Figs 1 and 2) or, optionally, more than one mooring line 7. For example, in a wind park with a number of floating wind turbine generators, one anchor 2 may provide support to more than one floating wind turbine generator, thereby reducing the total number of anchors required.

Advantageously, if allowing for the drill string 13 to be hung off from the vessel 10, the drill string 13 may be built and tripped in once per location, and hung off in a parking position, for example in the moon pool, while carrying out other activities. The other activities may be carried out by a crane or winch, or a combined crane and winch. When finished with such other activities, such as steps (c) and (d) described above, the vessel 10 may move to the next installation location and start the next drilling operation without having to build and trip in the entire drill string 13.

In any of the embodiments described here, the diameter of the hole 12 may, for example, be in the order of 1500 mm and the anchor member 14 may be in the order of 700-1300 mm for an anchor 2 suitable for use with a wind energy floater. Various other sizes may, however, be relevant for other applications, depending on the demands and requirements in any particular case.

Prior to commencing the drilling operation, an onboard ROV may be deployed to inspect and, if required, measure inclination or other parameters of the sea floor 4.

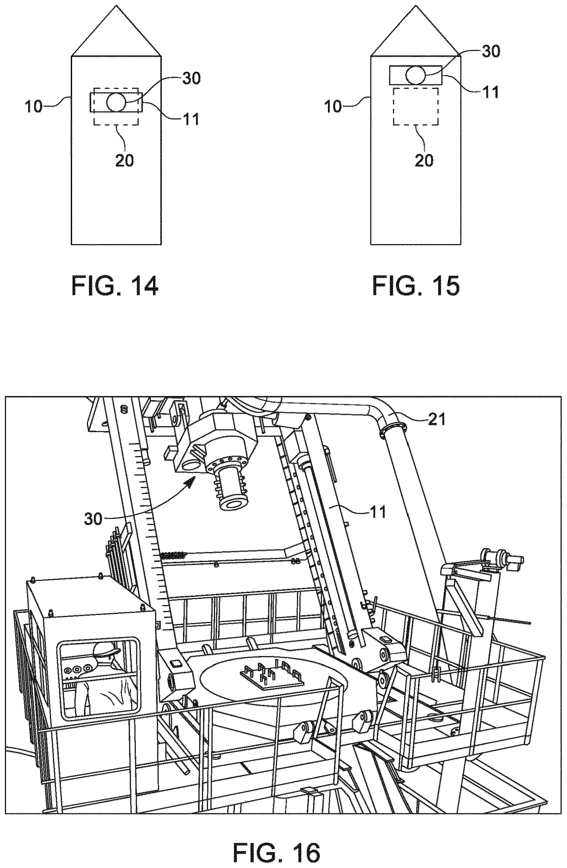

Optionally, the vessel 10 may have the functionality to skid or tilt the drilling machine 30 and associated components away from the moon pool area. This is illustrated in Figs 14 and 15 (see also Figs 9-13). The drilling machine 30 may be arranged supported by a support structure 11 which is movable in relation to the rest of the vessel 10 structure. For example, the support structure 11 may be skiddable or tiltable in relation to the moon pool 20.

This is illustrated in Figs 14 and 15, wherein the support structure 11 with the drilling machine 30 can be skidded in relation to the moon pool 20. The support structure 11 may be skidded completely away from an opening defined by the moon pool 20, as illustrated in Fig. 15, or only partially away from the opening. For example, if the drill string 13 remains suspended from the drilling machine 30 during for example the lowering of the anchor member 14, the support structure 11 may be skidded only sufficiently far to provide more space for other operations through the moon pool 20, but so that the drill string 13 may remain suspended from the drilling machine 30, through the moon pool 20, and into the water below the vessel 10.

Fig. 16 illustrates how the support structure 11 or a part of the support structure 11 can be tilted in order to provide more space above the moon pool area. Optionally or additionally, the entire platform as shown in Fig. 16 can be arranged with capability to be skidded sideways, similarly as illustrated in Figs 14 and 15.

Step (b) of the method may thus comprise operating a drilling machine 30 to drill the hole in the sea floor 4, as described above, and thereafter skidding or tilting a support structure 11 supporting the drilling machine 30. In this manner, the support structure 11, the drilling machine 30 or other associated components may be moved out of the way in order that other operations through the moon pool 20 can be carried out more easily.

Illustrated in Fig. 17, the method may comprise creating a liquid flow from a drill string head 13' and upwardly inside the drill string 13 to the vessel 10. In this embodiment, the method may include receiving soil particles or cuttings 19 on the vessel 10 via the liquid flow. The soil particles or cuttings 19 may be received on the vessel 10 for storage, processing or transport away. In this manner, the soil particles or cuttings 19 need not be dumped on the sea floor 4.

Carrying out the drilling as a reverse circulation drilling (RCD) process provides advantages that soil particles or cuttings 19 can be transported away from the site at or around the hole 12.

The liquid flow in the drill string 13 may, for example, be created by gas lift, i.e. by injecting gas (such as air) into the drill string 13. The liquid flow, including soil particles or cuttings 19, if present, may be received via a return pipe 21 arranged in association with the drilling machine 30, as can be seen in Figs 9a and 9b. The return pipe 21 may be connected to a liquid handling system, for example for separating liquid and soil particles or cuttings 19, other processing of the liquid, or discharge of the liquid.

Advantageously, a part of the soft layer 5 can be removed at a sea floor area larger than a cross-section area of the drill string head 13' or larger than a cross-section area of the drill string 13. This is indicated in Fig. 17, wherein a reverse circulation flow may be used to remove soil particles from the soft layer 5 over a larger area than the cross-sectional area required for the hole 12. This provides the advantage that the hole 12 may have less risk of collapsing or that the risk of operational disturbance is reduced.

The method may comprise positioning a lower end, such as a drill string head 13', of the drill string 13 above and adjacent the soft layer 5 or into the soft layer 5 while suspending the drill string 13 from the vessel 10 and creating a liquid flow upwardly inside the drill string 13 to the vessel 10. In this embodiment, one may, for example, hover the lower end above the soft layer 5 while moving the vessel 10 in order that a larger area of the soft layer 5 is removed and transported to the vessel 10 via the liquid flow in the drill string 13.

As can be seen in e.g. Figs 9a and 9b, the drilling machine 30 can be supported by a support structure 11 on the vessel 10. The support structure 11 can provide rotational support to the drilling machine 30 in a horizontal plane when the drilling machine 30 imposes a moment on the drill string 13 for rotating the drill string 13, and thus hold the drilling machine 30 rotationally fixed in relation to the vessel 10. Advantageously, the support structure 11 comprises a heave compensated frame 11' supporting the drilling machine 30. The heave compensated frame 11' may, for example, comprise vertically arranged hydraulic cylinders which allows for vertical motion of the drilling machine 30 in response to vessel heave.

Alternatively, the drilling machine 30 may be suspended by a heave compensated crane 31 (see Figs 10-13). In such an arrangement, the crane 31 can be arranged to hold the drilling machine 30 vertically, e.g. by suspending the drilling machine 30 from the crane via a hook or the like. The support structure 11 may be arranged to provide rotational support to the drilling machine 30, as described above, but to allow the drilling machine 30 to move freely in the vertical direction, e.g. along tracks or support rods. A movable frame, similar to frame 11', may be used for this purpose. The crane 31 may be operated in heave compensation mode to hold the drilling machine 30, in order to provide heave compensation capability of the drilling machine 30.

In any of the embodiments herein, the heave compensation may be passive heave compensation or active heave compensation.

Illustrated in Fig. 18, in any of the embodiments described herein the method may, optionally, be carried out over a side of the vessel via a cantilever structure 40 extending outwardly from a side 41 of the vessel. This may include building the drill string 13 from the cantilever structure 40, such that the drill string 13 is (directly or indirectly) suspended from the cantilever structure 40.

Additionally, or alternatively, the anchor member 14 may be lowered from the vessel 10 via a cantilever structure 40, for example by suspending the anchor member 14 directly or indirectly from the cantilever structure 40 while lowering it or by for example lateral support of the lifting member 16 while lowering it.

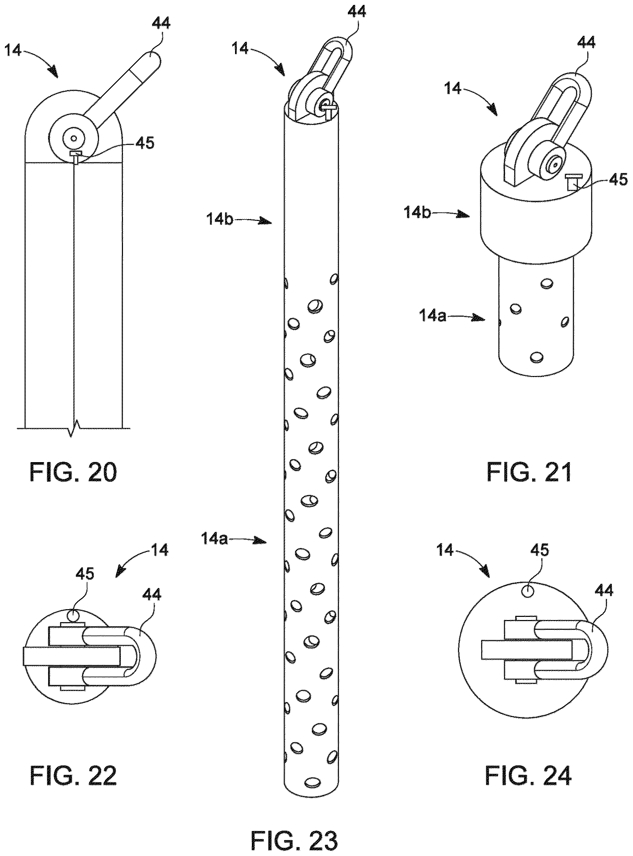

Figs 19-24 illustrate various embodiments of an anchor member 14 suitable for use with the method described herein. The anchor member 14 may have a suspension member 44, for example a shackle or a hook, from which it can be suspended and lowered from the vessel 10 via the lifting member 16.

Advantageously, the anchor member 14 may have a perforated lower part 14a. This may allow for cement to be distributed in and around the anchor member 14 in a manner beneficial for the anchor member 14 to be fixed reliably in the hole 12.

The lower part 14b may be formed as a hollow, elongate tube, see for example Figs 19, 21 and 23.

The anchor member 14 may comprise an inlet tube probe 45 arranged for injection of cement into an internal part of the anchor member 14. The anchor member 14 may be arranged hollow for this purpose, for example in an elongate cylindrical form, whereby an internal volume of the anchor member 14 may be filled with cement via the inlet tube probe 45. The inlet tube probe 45 may extend downwardly inside the anchor member 14.

The cementing hose 15 may be connected to the inlet tube probe 45 before the anchor member 14 is lowered to the sea floor 4. Alternatively, the cementing hose 15 may be connected to the inlet probe 45 after lowering of the anchor member 14, for example by assistance of an ROV 17. In this manner, cementing of the anchor member 14 may be done by filling cement into an inside volume of the anchor member 14 in addition to filling an annulus volume around the anchor member 14 in the hole 12. Optionally, the anchor member 14 may be cemented in place in the hole 12 by filling the annulus around the anchor member 14 in the hole 12 with cement.

If the inlet tube probe 45 extends into the interior volume of the anchor member 14, the method may comprise retracting the inlet tube probe 45 from inside the anchor member 14 during the cementing operation to achieve enhanced cement distribution, both inside the anchor member 14 and the annulus around the anchor member 14 by use of an onboard cement reel and assisted by ROV 17.

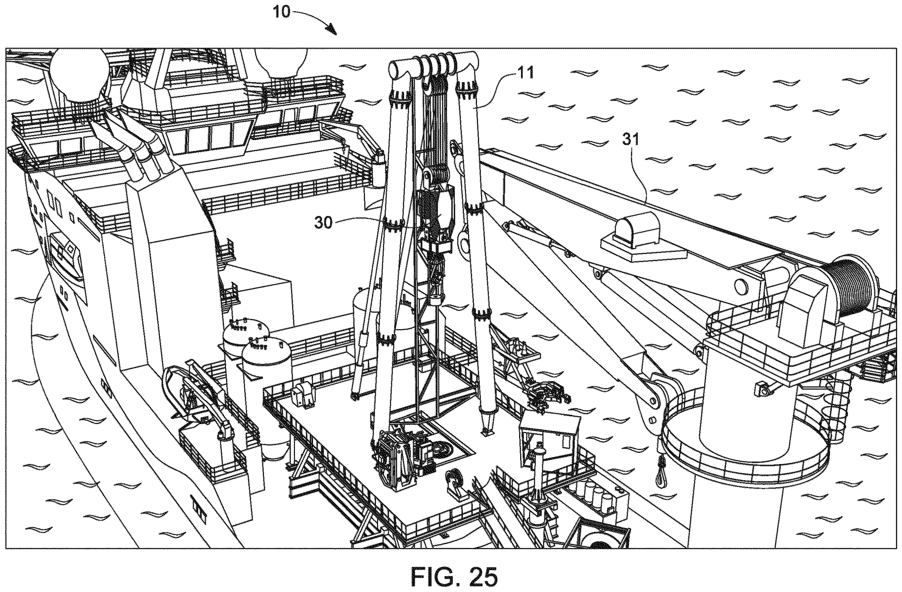

Fig. 25 illustrates an embodiment of a vessel 10 having an alternative support structure 11 for holding and suspending the drilling machine 30.

Embodiments described herein may, for example, be suitable for installation of floating renewable energy installations such as floating wind turbine units. According to embodiments, a more flexible installation of the mooring and anchoring systems can be achieved. For example, a structurally reliable mooring in different or varying soil conditions can be obtained, and operations may be less sensitive to water depth. Additionally, or alternatively, a high installation efficiency can be obtained, allowing the use of less specialized installation vessels and/or reducing dependency on weather windows. This may be advantageous for example in the installation of large renewable energy parks, with a high number of mooring points required.

Advantageously, the vessel 10 may additionally be equipped for installing suction anchors. Having the possibility to carry out such "dual" operations can give advantages of more efficient operations for example in areas with varying soil conditions, where a combination of suction anchors and cemented anchors may be used.

The system and method may be employed using lighter vessels than would normally be used for subsea drilling operations. For example, such vessels known as offshore service vessels may be suitable for this purpose.

The invention is not limited by the embodiments described above; reference should be had to the appended claims.

## Claims

1. A method for installing a sea floor anchor (2), the method comprising the steps
(a) building a drill string (13) from a vessel (10),
(b) drilling a hole (12) in the sea floor (4),
(c) lowering an anchor member (14) from the vessel (10) and into the hole (12), and
(d) cementing the anchor member (14) in place in the hole (12) via a cementing hose (15) from the vessel (10),
**characterized by**, after carrying out steps (a)-(d), moving the vessel (10) to a new drilling location with the drill string (13) hung off from the vessel (10).

2. A method according to claim 1, wherein step (b) comprises drilling through a moon pool (20) of the vessel (10).

3. A method according to any preceding claim, wherein step (c) comprises lowering the anchor member (14) through a moon pool (20) of the vessel (10).

4. A method according to any preceding claim, the method comprising hanging off the drill string (13) from the vessel (10) while carrying out steps (c) and (d).

5. A method according to any preceding claim, the method comprising skidding or otherwise moving the drill string (13) sideways prior to carrying out steps (c) and (d).

6. A method according to any preceding claim, wherein step (c) comprises lowering the cementing hose (15) together with the anchor member (14) and fixed to the anchor member (14).

7. A method according to any preceding claim, wherein step (b) comprises drilling the hole (12) with a diameter of more than 500 mm, more than 750 mm, more than 1000 mm or more than 1250 mm.

8. A method according to any preceding claim, wherein step (b) comprises suspending the drill string (13) from the vessel (10) from a heave compensated drilling machine (30).

9. A method according to any preceding claim, wherein step (b) comprises creating a liquid flow from a drill string head (13') and upwardly inside the drill string (13) to the vessel (10).

10. A method according to claim 9, comprising receiving soil particles or cuttings (19) on the vessel (10) via the liquid flow.

## Patentansprüche

1. Verfahren zum Installieren eines Meeresbodenankers (2), wobei das Verfahren die folgenden Schritte umfasst:
(a) Aufbauen eines Bohrstrangs (13) aus einem Schiff (10),
(b) Bohren eines Lochs (12) in den Meeresboden (4),
(c) Absenken eines Ankerelements (14) aus dem Schiff (10) in das Loch (12) und
(d) Zementieren des Verankerungselements (14) in dem Loch (12) über einen Zementierschlauch (15) aus dem Schiff (10),
**dadurch gekennzeichnet, dass** nach Ausführen der Schritte (a)-(d) das Schiff (10) zu einem neuen Bohrort bewegt wird, wobei das Bohrgestänge (13) von dem Schiff (10) abgehängt wird.

2. Verfahren nach Anspruch 1, wobei Schritt (b) das Bohren durch einen Moonpool (20) des Schiffes (10) umfasst.

3. Verfahren nach einem der vorhergehenden Ansprüche, wobei Schritt (c) das Absenken des Ankerelements (14) durch einen Moonpool (20) des Schiffes (10) umfasst.

4. Verfahren nach einem der vorhergehenden Ansprüche, wobei das Verfahren das Abhängen des Bohrstrangs (13) von dem Schiff (10) während der Ausführung der Schritte (c) und (d) umfasst.

5. Verfahren nach einem der vorhergehenden Ansprüche, wobei das Verfahren das seitliche Schleudern oder anderweitige Bewegen des Bohrstrangs (13) vor dem Ausführen der Schritte (c) und (d) umfasst.

6. Verfahren nach einem der vorhergehenden Ansprüche, wobei Schritt (c) das Absenken des Zementierschlauchs (15) zusammen mit dem Ankerelement (14) und befestigt an dem Ankerelement (14) umfasst.

7. Verfahren nach einem der vorhergehenden Ansprüche, wobei Schritt (b) das Bohren des Lochs (12) mit einem Durchmesser von mehr als 500 mm, mehr als 750 mm, mehr als 1000 mm oder mehr als 1250 mm umfasst.

8. Verfahren nach einem der vorhergehenden Ansprüche, wobei Schritt (b) das Aufhängen des Bohrstrangs (13) an dem Schiff (10) an einer hubkompensierten Bohrmaschine (30) umfasst.

9. Verfahren nach einem der vorhergehenden Ansprüche, wobei Schritt (b) das Erzeugen eines Flüssigkeitsstroms von einem Bohrstrangkopf (13') und nach oben innerhalb des Bohrstrangs (13) zu dem Schiff (10) umfasst.

10. Verfahren nach Anspruch 9, umfassend das Aufnehmen von Bodenpartikeln oder Bohrklein (19) auf dem Schiff (10) über den Flüssigkeitsstrom.

## Revendications

1. Procédé d'installation d'un ancrage de fond marin (2), le procédé comprenant les étapes de
(a) construction d'un train de tiges de forage (13) à partir d'un navire (10),
(b) forage d'un trou (12) dans le fond marin (4),
(c) abaissement d'un élément d'ancrage (14) depuis le navire (10) et dans le trou (12), et
(d) cimentation de l'élément d'ancrage (14) en place dans le trou (12) via un tuyau de cimentation (15) depuis le navire (10),
**caractérisé par**, après avoir exécuté les étapes (a) à (d), le déplacement du navire (10) vers un nouvel emplacement de forage avec le train de tiges de forage (13) suspendu au navire (10).

2. Procédé selon la revendication 1, dans lequel l'étape (b) comprend le forage à travers un puits central (20) du navire (10) .

3. Procédé selon une quelconque revendication précédente, dans lequel l'étape (c) comprend l'abaissement de l'élément d'ancrage (14) à travers un puits central (20) du navire (10).

4. Procédé selon une quelconque revendication précédente, le procédé comprenant la suspension du train de tiges de forage (13) du navire (10) pendant l'exécution des étapes (c) et (d).

5. Procédé selon une quelconque revendication précédente, le procédé comprenant le ripage ou le déplacement latéral du train de tiges de forage (13) avant l'exécution des étapes (c) et (d).

6. Procédé selon une quelconque revendication précédente, dans lequel l'étape (c) comprend l'abaissement du tuyau de cimentation (15) conjointement avec l'élément d'ancrage (14) et fixé à l'élément d'ancrage (14).

7. Procédé selon une quelconque revendication précédente, dans lequel l'étape (b) comprend le forage du trou (12) avec un diamètre supérieur à 500 mm, supérieur à 750 mm, supérieur à 1 000 mm ou supérieur à 1 250 mm.

8. Procédé selon une quelconque revendication précédente, dans lequel l'étape (b) comprend la suspension du train de tiges de forage (13) du navire (10) à partir d'une machine de forage à compensation de houle (30).

9. Procédé selon une quelconque revendication précédente, dans lequel l'étape (b) comprend la création d'un écoulement de liquide depuis une tête de train de tiges de forage (13') et vers le haut à l'intérieur du train de tiges de forage (13) jusqu'au navire (10).

10. Procédé selon la revendication 9, comprenant la réception de particules de terre ou de déblais (19) sur le navire (10) via l'écoulement de liquide.
